# EUROPÄISCHE PATENTSCHRIFT

(11) **EP 2 824 254 B1**
(45) Veröffentlichungstag und Bekanntmachung des Hinweises auf die Patenterteilung: **17.10.2018**
(21) Anmeldenummer: 14175899.5
(22) Anmeldetag: 07.07.2014
(51) Int. Cl.: E04F 13/08, E04F 13/14, H02G 3/38, E04C 2/52

(54) **Bausatz zur Verkleidung und Verrohrung von Sanitärräumen, sowie Verfahren zum Renovieren von Sanitärräumen**
Kit for cladding and plumbing sanitary rooms, and method for renovating sanitary rooms
Kit de tubage et d'habillage de pièces sanitaires, et procédé de rénovation de pièces sanitaires

(30) Priorität: 11.07.2013 DE 102013107338
(43) Veröffentlichungstag der Anmeldung: 14.01.2015
(73) Patentinhaber: I.C.B. Innovations-Center-Bad GmbH & Co. KG, 33181 Bad Wünnenberg (DE)
(72) Erfinder:
(74) Vertreter: Wickord, Wiro

(56) Entgegenhaltungen:
- FR-A1- 2 952 662
- GB-A- 2 466 128
- JP-A- H10 331 294

## Beschreibung

Die Erfindung betrifft einen Bausatz zum Verkleiden und Verrohren von Sanitärräumen mit einer Mehrzahl von werkseitig vorgefertigten Wandelementen, wobei die Wandelemente eine Trägerplatte und eine mit der Trägerplatte verbundene Dekorschicht umfassen und wobei in mindestens einem Wandelement in der Trägerplatte Installationsleitungen für die Warm- und/oder Kaltwasserführung und/oder Installationsleitungen für ein Heizungsmodul und/oder Elektroleitungen vorgesehen sind, welche sich über einen Teil der Höhe des mindestens einen Wandelements erstrecken, und mit mindestens einer den Installationsleitungen und/oder den Elektroleitungen zugeordneten Funktionsstelle, welche als eine Anschlussstelle oder ein Steuerelement für einen Wasser- und/oder Stromverbraucher und/oder für das Heizmodul ausgebildet ist.

Ferner betrifft die Erfindung ein Verfahren zum Renovieren von Sanitärräumen, bei welchen zunächst als Bausatz werksseitig verschiedene Wandelemente umfassend eine Trägerplatte und eine daran festgelegte Dekorschicht gefertigt werden, wobei in mindestens einem der Wandelemente in der Trägerplatte Installationsleitungen für die Warm- und/oder Kaltwasserführung und/oder Installationsleitungen für ein Heizungsmodul und/oder Elektroleitungen eingebettet sind, welche sich über mindestens einen Teil der Höhe des jeweiligen Wandelements erstrecken, und wobei an dem Wandelement den Installationsleitungen und/oder den Elektroleitungen zugeordnete Funktionsstellen, welche als Anschlussstellen oder Steuerelemente für einen Wasser- und/oder Stromverbraucher und/oder für das Heizmodul ausgebildet sind, vorgesehen werden, und bei welchen die vorgefertigten Wandelemente dann an den Wänden des Sanitärraums an den hierfür vorgesehenen Stellen festgelegt werden und die wandelementseitigen Installationsleitungen und/oder Elektroleitungen mit den Wasser- und/oder Stromverbrauchern und/oder mit den im Sanitärraum vorhandenen Versorgungs- und/oder Entsorgungsrohren verbunden werden.

Ein gattungsgemäßer Bausatz, ein gattungsgemäßes Verfahren sowie eine den Bausatz umfassende Installationsanordnung sind aus der deutschen Patentschrift DE 196 39 770 C2 der Anmelderin bekannt. Durch den Bausatz und das Verfahren zur Modernisierung von Sanitärräumen ist es gelungen, moderne und flexible Installationsanordnungen für Sanitärräume wirtschaftlich und schnell in gleichbleibend hoher Qualität herzustellen. Insbesondere die werksseitige Vorfertigung der Bauteilkomponenten und das standardisierte Montageverfahren setzen Maßstäbe und machen es möglich, dem Kunden einen exakten Zeitplan für die Renovierungsarbeiten vorzugeben.

Aus der GB 2 466 128 A ist ein mehrschichtig ausgebildetes Wandelement bekannt mit einer flächig ausgebildeten Trägerplatte und mit einer Dekorschicht sowie einer Mehrzahl von in dem Wandelement im Wesentlichen vertikal orientiert vorgesehenen Installationsleitungen, wobei den Installationsleitungen zugeordnete Funktionsstellen vorgesehen werden, welche nach Art einer Anschlussstelle ausgebildet sind oder ein Steuerelement vorsehen. Das Wandelement ist jedenfalls abschnittsweise diffusionsdicht ausgebildet.

Aus der JP H10 331294 A ist ein Wandelement mit einem Rahmen und einer von dem Rahmen umschlossenen Isolationsschicht bekannt. Die Isolationsschicht ist beispielsweise durch Glaswolle gebildet. Im Bereich der Glaswolle sind Installationsleitungen geführt.

Aus der FR 2 952 662 A1 ist eine diffusionsdicht ausgebildete Leichtbauwandanordnung bekannt, welche nach Art eines Holzständerwerks gebildet ist. In dem Holzständerwerk lokal gebildete Ausnehmungen dienen der Aufnahme von Isolationsmaterial. Zusätzlich werden der Aufnahme von Installations- beziehungsweise Elektroleitungen dienende Kabelschächte vorgesehen.

Aufgabe der vorliegenden Erfindung ist es, den Bausatz sowie das Verfahren zur Renovierung von Sanitärräumen insbesondere an die sich ändernden energetischen Randbedingungen anzupassen. Hierbei gilt es, unter Beibehaltung der Wirtschaftlichkeit die Nachhaltigkeit der Renovierungsmaßnahme zu verbessern.

Zur Lösung der Aufgabe weist die Erfindung die Merkmale des Patentanspruchs 1 auf.

Der besondere Vorteil der Erfindung besteht darin, dass ein Eintrag von Feuchtigkeit in die nach der Montage der Wandelemente hinter denselben gelegene Sanitärraumwände entgegengewirkt wird. Insbesondere wird durch das Vorsehen des diffusionsdichten Wandelements der typischerweise hohen Luftfeuchtigkeit im Sanitärraum Rechnung getragen. Die Modernisierung des Sanitärraums mittels der Wandelemente des erfindungsgemäßen Bausatzes sorgt insofern für eine hohe Nachhaltigkeit der Renovierungsmaßnahme und verhindert eine Schädigung der Sanitärraumwände durch eindringende Feuchtigkeit.

Nach der Erfindung wird im Bereich der an dem Wandelement vorgesehenen Funktionsstellen die Diffusionsdichtheit durch ein zusätzlich eingebrachtes Diffusionsmittel hergestellt. Das Diffusionsmittel wird bevorzugt zwischen der Anschlussstelle beziehungsweise dem Steuerelement einerseits und der Dekorschicht, der Trägerplatte beziehungsweise der diffusionsdichten Schicht andererseits verbaut. Vorteilhaft kann hierdurch die Diffusionsdichtheit auch im Bereich von funktional notwendigen und für den Anschluss von Sanitärobjekten wie Waschtisch oder Toilette beziehungsweise elektrischen Funktionseinheiten wie Schalter, Steckdose oder Leuchte vorgesehene Funktionsstellen realisiert werden. Eine Funktionsstelle bedingt insofern eine Ausnehmung oder einen Teildurchbruch in dem Wandelement insbesondere im Bereich der Dekorschicht und kann zu einer Durchbrechung oder Schwächung der diffusionsdichten Schicht führen. Als Diffusionsmittel können beispielsweise diffusionsdichte Schäume, Verkleidungen oder Folien vorgesehen werden, welche insbesondere an die ansonsten diffusionsdicht ausgebildeten Schichten des Wandelements angeschlossen werden.

Nach einer Weiterbildung der Erfindung kann die diffusionsdichte Schicht zwischen der Dekorschicht und der Trägerplatte oder auf einer der Dekorschicht abgewandten Rückseite der Trägerplatte vorgesehen sein. Vorteilhaft kann die diffusionsdichte Schicht als flächige Beschichtung der Trägerplatte oder der Dekorschicht besonders wirtschaftlich hergestellt werden. Die diffusionsdichte Schicht wird hierbei werksseitig hergestellt, sodass das diffusionsdichte Wandelement vollständig vorgefertigt an die Baustelle geliefert und dort in einfacher Weise an der vorgesehenen Stelle montiert werden kann.

Zur Lösung der Aufgabe weist die Erfindung die Merkmale des Patentanspruchs 3 auf.

Der besondere Vorteil der Erfindung besteht darin, dass zur Herstellung eines vollständig diffusionsdichten Wandelements auch aufgrund der Funktionsstellen geschwächte Bereiche desselben nach der Installation der Installationsleitungen diffusionsdicht gestaltet werden. Als Diffusionsmittel können beispielsweise Auskleidungen, elastische beziehungsweise selbsthärtende Schäume oder auf die Geometrie der Funktionsstelle angepasste Folien vorgesehen werden. Das Diffusionsmittel wird dabei diffusionsdicht an die benachbarten Bereiche des Wandelements angebunden, zum Beispiel mit der diffusionsdichten Schicht verklebt. Insofern ergibt sich ein auch im Bereich der Funktionsstellen diffusionsdicht ausgebildetes Wandelement.

Die Diffusionsmittel zum Dichten der Funktionsstellen können werksseitig oder vor Ort auf der Baustelle angebracht werden. Die werksseitige Vormontage bietet sich insbesondere an, um den Renovierungsaufwand vor Ort auf der Baustelle zu reduzieren. Die Diffusionsmittel können hierbei als Komponenten des Bausatzes in Form von Gleichteilen bereitgestellt und in identischer Weise zum Abdichten sich wiederholender Funktionsstellen genutzt werden. Beispielsweise kann ein für den Anschluss einer Toilettenspülung vorgesehene Funktionsstelle werksseitig diffusionsdicht ausgestaltet werden, in dem nach der Montage der Installationsleitung ein an das Wandelement über die Dekorschicht herausgeführter Anschlussstutzen mit einer rosettenartigen Manschette umkleidet und dabei der im Bereich der Dekorseite entstandene Teildurchbruch diffusionsdicht verschlossen wird.
Nach einer bevorzugten Ausführungsform der Erfindung wird eine diffusionsdichte Schicht an dem Wandelement zwischen der Dekorschicht und der Trägerplatte oder auf einer der Dekorschicht abgewandten Rückseite der Trägerplatte ausgebildet. Die diffusionsdichte Schicht kann hierbei vorteilhaft in einfacher Weise mit dem Diffusionsmittel der Funktionsstelle verbunden, beispielsweise flächig verklebt werden. Das Verfahren begünstigt insofern das Herstellen eines vollständig diffusionsdichten Wandelements. Beispielsweise kann das Diffusionsmittel für die Funktionsstelle aus einer Folie gefertigt sein, die gleichermaßen zur Herstellung der diffusionsdichten Schicht dient. Nach einer Weiterbildung der Erfindung ist im Bereich eines Bodens des Sanitärraums eine diffusionsdichte Wanne zur Verhinderung von Feuchtigkeitseintrag in einen unterhalb der Wanne vorgesehenen Bodenabschnitt ausgebildet. Im Rahmen der Montage der Wandelemente kann zwischen den Wandelementen einerseits und der Wanne andererseits ein diffusionsdichter Übergang hergestellt werden. Vorteilhaft wird durch das Vorsehen der diffusionsdichten und bevorzugt zugleich fluiddichten Wanne der Eintrag von Feuchtigkeit sowohl in die Sanitärraumwände als auch in den unterhalb der Wanne vorgesehenen Bodenabschnitt verhindert. Die Bausubstanz wird hierdurch noch besser geschützt, und die Nachhaltigkeit beziehungsweise Werthaltigkeit der Modernisierungsmaßnahme verbessert.

Beispielsweise sieht eine Installationsanordnung die nicht beansprucht ist, ein an einer Seitenwand des Sanitärraums festgelegtes Wandelement nach einem der Ansprüche 1 bis 2 vor, wobei das Wandelement zumindest abschnittsweise diffusionsdicht ausgebildet ist und wobei das Wandelement diffusionsdicht mit einem benachbarten Wandelement beziehungsweise mit einer im Bereich eines Bodens des Sanitärraums vorgesehenen diffusionsdichten Wanne derart verbunden ist, dass ein Übergang zwischen den benachharten Wandelementen beziehungsweise dem Wandelement und der Wanne hergestellt ist.
Die mittels des Bausatzes zum Verkleiden und Verrohren von Sanitärräumen hergestellte Installationsanordnung kann insgesamt diffusionsdicht hergestellt werden. Insbesondere können benachbarte Wandelemente diffusionsdicht miteinander verbunden werden. Ebenso kann vorgesehen sein, dass die Wandelemente diffusionsdicht mit einer diffusionsdichten und vorteilhaft zugleich fluiddichten Wanne verbunden sind. Insofern wird ein Feuchtigkeitseintrag in die mit den Wandelementen verkleideten Sanitärraumwände beziehungsweise die unterhalb der Wanne vorgesehenen Bodenabschnitte verhindert.

Nach einer Weiterbildung der Installationsanordnung die nicht beansprucht ist, ist zwischen zwei benachbarten Wandelementen zur diffusionsdichten Verbindung derselben ein Diffusionssteg vorgesehen. Der Diffusionssteg besteht selbst aus einem diffusionsdichten Material. Die beiden benachbarten Wandelemente sind jeweils diffusionsdicht an den Diffusionssteg angebunden. Beispielsweise ist zur diffusionsdichten Anbindung der Wandelemente an den Diffusionssteg die diffusionsdichte Schicht der Wandelemente mit dem Diffusionssteg verklebt. Der Diffusionssteg kann hierbei als standardisierte Komponente des Bausatzes kostengünstig und in großer Stückzahl hergestellt und in einfacher Weise montiert werden. Der Diffusionssteg kann darüber hinaus dazu dienen, benachbarte Wandelemente relativ zueinander auszurichten beziehungsweise aus der Sanitärraumwand zu positionieren.
Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Bausatzes gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

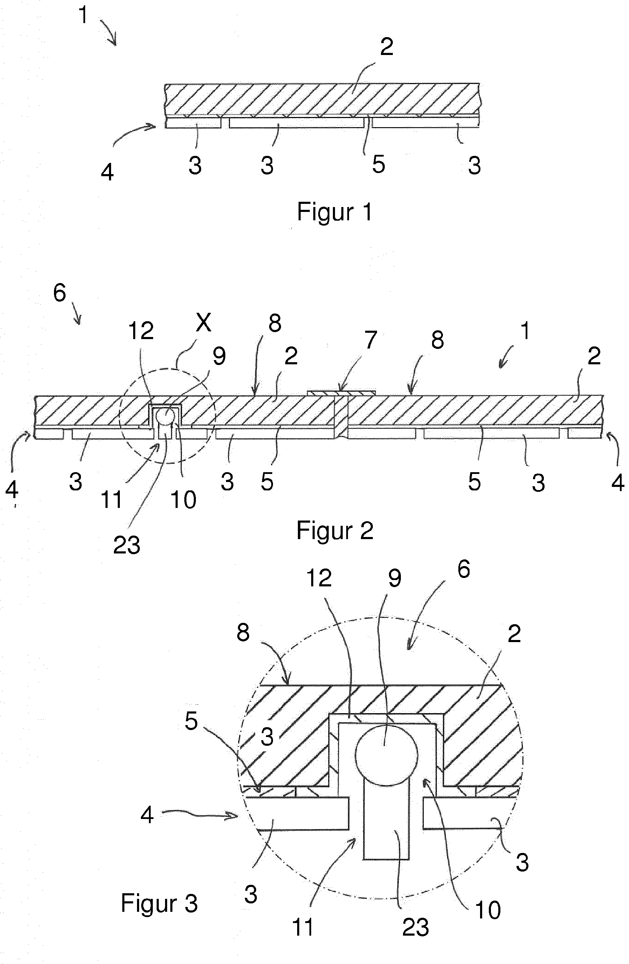

Es zeigen:
- Figur 1: einen Querschnitt durch ein erfindungsgemäßes Wandelement des Bausatzes mit einer diffusionsdichten Schicht,
- Figur 2: einen Querschnitt durch eine aus zwei Wandelementen und einem zwischen den Wandelementen vorgesehenen Diffusionssteg gebildete Installationsanordnung,
- Figur 3: eine Detailvergrößerung des Ausschnitts X nach Figur 2,
- Figur 4: eine alternative Ausführungsform der Installationsanordnung die nicht beansprucht ist, nach Figur 2,
- Figur 5: eine Detailvergrößerung des Ausschnitts Y nach Figur 4,
- Figur 6: einen Querschnitt durch eine den erfindungsgemäßen Bausatz sowie eine diffusionsdichte Wanne umfassende Installationsanordnung die nicht beansprucht ist, und
- Figur 7: eine Detailvergrößerung des Ausschnitts Z nach Figur 6.
Ein erfindungsgemäß diffusionsdicht ausgebildetes Wandelement 1 nach Figur 1 umfasst eine Trägerplatte 2, eine durch eine Mehrzahl von Fliesen 3 gebildete Dekorschicht 4 sowie eine zwischen der Dekorschicht 4 und der Trägerplatte 2 vorgesehene diffusionsdichte Schicht 5. Die diffusionsdichte Schicht 5 ist beispielsweise durch eine diffusionsdichte Folie oder einen diffusionsdichten Anstrich der Trägerplatte 2 gebildet. Das Wandelement 1 wird vorzugsweise werksseitig vorgefertigt. Die Fliesen 3 werden zur Gewährleistung eines einheitlichen Fugenbilds beispielsweise nach der Montage des Wandelements vor Ort auf der Baustelle verfugt.
Eine das erfindungsgemäße Wandelement 1 und ein weiteres erfindungsgemäßes Wandelement 6 umfassende Installationsleitung 9 gemäß Figur 2 sieht als zusätzliche Komponente des Bausatzes einen zwischen den Wandelementen 1, 6 vorgesehenen Diffusionssteg 7 vor. Der Diffusionssteg 7 ist beispielsweise aus einem Kunststoffmaterial oder einem beliebigen anderen, diffusionsdichten Werkstoff hergestellt. Die Wandelemente 1, 6 sind mit dem Diffusionssteg 7 vorzugsweise verklebt oder anderweitig diffusionsdicht an dem Diffusionssteg 7 angebunden. Der Diffusionssteg 7 ist T-förmig ausgebildet. Er umfasst die benachbarten Wandelemente 1, 6 rückseitig und liegt hierbei an einer Rückseite 8 der Wandelemente 1, 6 an. Ferner erstreckt er sich zwischen den benachbarten Wandelementen 1, 6 über die gesamte Dicke derselben bis in den Bereich der Dekorschicht 4.
Gleiche Bauteile und Bauteilfunktionen sind durch gleiche Bezugszeichen gekennzeichnet.
Die diffusionsdichte Schicht 5 ist im Bereich des Wandelements 6 aufgrund einer für die Installationsleitung 9 vorgesehenen Ausnehmung 10 unterbrochen. Die Installationsleitung 9 ist beispielsweise als Elektroleitung vorgesehen, wobei eine Funktionsstelle 11, welche der Installationsleitung 9 zugeordnet ist, lediglich schematisch dargestellt ist. Beispielsweise handelt es sich bei der Funktionsstelle 11 um ein Lichtschaltelement, eine Steckdose oder einen Wandauslass für eine Leuchte.
Die diffusionsdichte Ausgestaltung der Ausnehmung 10 wird realisiert, indem die Ausnehmung 10 mantelseitig mit einem Diffusionsmittel 12 ausgekleidet ist. Beispielsweise handelt es sich um eine diffusionsdichte Folie, welche bei der werksseitigen Fertigung des Wandelements 6 in die Ausnehmung 10 eingebracht wird, bevor die Installationsleitung 9 in die Ausnehmung 10 eingesetzt wird.
Das Diffusionsmittel 10 ist diffusionsdicht mit der diffusionsdichten Schicht 5 verbunden. Gemeinsam gewährleisten die diffusionsdichte Schicht 5 und das Diffusionsmittel 12 insofern eine diffusionsdichte Realisierung des die Ausnehmung 10 aufweisenden Wandelements 6.

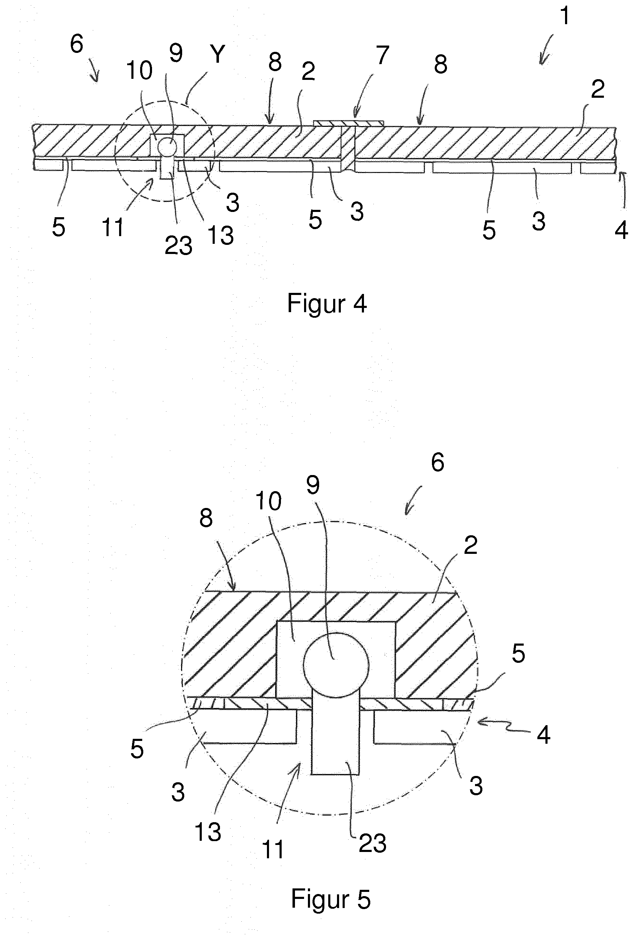

Nach einer alternativen Ausführungsform der Installationsanordnung die nicht beansprucht ist, gemäß der Figuren 4 und 5 kann im Bereich der Ausnehmung 10 ein rosettenförmiges Diffusionsmittel 13 zur diffusionsdichten Durchführung eines Anschlussstutzens 23 der Installationsleitung 9 vorgesehen sein. Die Rosette 13 ist beispielsweise aus einer diffusionsdichten Folie hergestellt und diffusionsdicht mit der diffusionsdichten Schicht 5 verbunden.

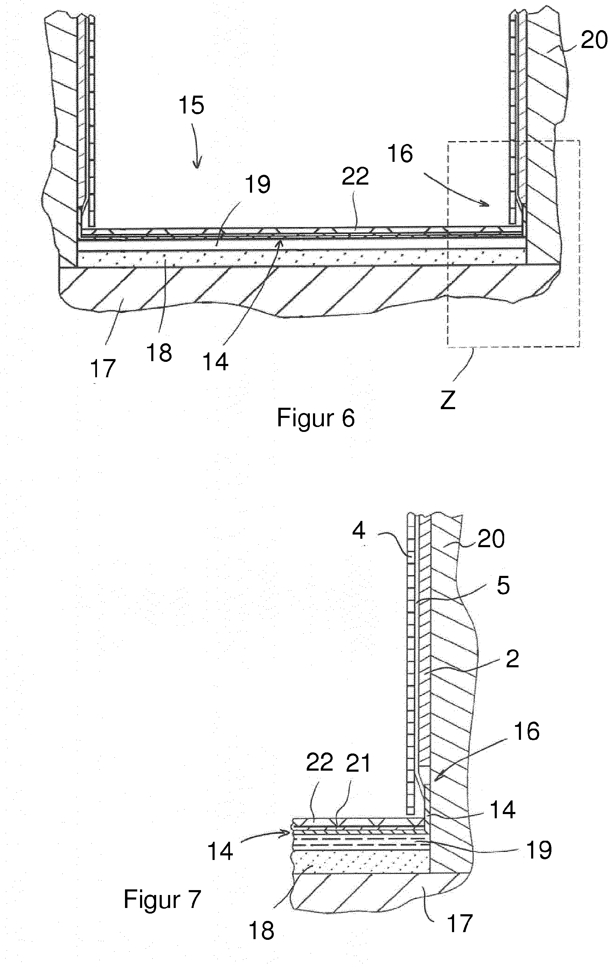

Eine diffusionsdicht ausgebildete Installationsanordnung, die nicht beansprucht ist, welche die erfindungsgemäßen Wandelemente 1, 6 und zusätzlich eine diffusionsdichte Bodenwanne 14 umfasst, ist in den Figuren 6 und 7 dargestellt. Die Wandelemente 1, 6 weisen wie gehabt eine diffusionsdichte Schicht 5 zwischen der Trägerplatte 2 und der Dekorschicht 4 auf. Im Bereich eines Bodens 15 des Sanitärraums ist zudem die diffusionsdichte und bevorzugt zugleich fluiddichte Wanne 14 vorgesehen, welche beispielhaft mit der diffusionsdichten Schicht 5 in einem Übergangsbereich 16 verbunden, vorzugsweise verklebt beziehungsweise verschweißt ist.
Exemplarisch ist die Wanne 14 für den Fall dargestellt, dass ein vormaliger Fußbodenaufbau vollständig entfernt wird. Auf einem Rohfußboden 17 wird nach dem Entfernen des vorherigen Fußbodenaufbaus zunächst eine Granulatschüttung 18 und anschließend ein Estrich 19 aufgebracht. Auf dem Estrich 19 wird dann die Wanne 14 gebildet. Die Wanne 14 erstreckt sich abschnittsweise bis in den Bereich der Wände 20 des Sanitärraums. Anschließend wird auf die Wanne 14 ein Kleber 21 und eine Nutzfußbodenschicht 22, beispielsweise ein Fliesenfußboden, aufgebracht. Nach dem Herstellen des Fußbodenaufbaus werden dann die Wandelemente 1, 6 an den Seitenwänden 20 des Sanitärraums festgelegt und die diffusionsdichten Übergangsbereiche 16 hergestellt.
Nach einer alternativen, nicht dargestellten Ausführungsform der Erfindung können die Trägerplatte 2 beziehungsweise die Dekorschicht 4 diffusionsdicht ausgebildet sein. Ebenso kann vorgesehen sein, dass die diffusionsdichte Schicht 5 im Bereich der Rückseite 8 der Trägerplatte 2 vorgesehen wird.

## Patentansprüche

1. Bausatz zum Verkleiden und Verrohren von Sanitärräumen mit einer Mehrzahl von werkseitig vorgefertigten Wandelementen (1, 6), wobei die Wandelemente (1, 6) eine Trägerplatte (2) und eine mit der Trägerplatte (2) verbundene Dekorschicht (4) umfassen und wobei in mindestens einem Wandelement (6) in der Trägerplatte (2) Installationsleitungen (9) für die Warm- und/oder Kaltwasserführung und/oder Installationsleitungen (9) für ein Heizungsmodul und/oder Elektroleitungen vorgesehen sind, welche sich über einen Teil der Höhe des mindestens einen Wandelements (6) erstrecken, und mit mindestens einer den Installationsleitungen (9) und/oder den Elektroleitungen zugeordneten Funktionsstelle (11), welche als eine Anschlussstelle oder ein Steuerelement für einen Wasser- und/oder Stromverbraucher und/oder für das Heizmodul ausgebildet ist, wobei das Wandelement (1, 6) wenigstens abschnittsweise als diffusionsdichtes Wandelement (1, 6) ausgebildet ist, wobei die Trägerplatte (2) und/oder die Dekorschicht (4) diffusionsdicht ausgebildet sind und/oder eine diffusionsdichte Schicht (5) zusätzlich vorgesehen wird, wobei die diffusionsdichte Schicht (5) im Bereich des Wandelements(6) aufgrund einer für die Installationsleitung (9) vorgesehenen Ausnehmung (10) unterbrochen ist, **dadurch gekennzeichnet, dass** im Bereich der an dem Wandelement (1, 6) vorgesehenen Funktionsstellen (11) die Diffusionsdichtheit durch ein zusätzlich eingebrachtes Diffusionsmittel (12, 13) hergestellt ist, welches zwischen der Anschlussstelle und/oder dem Steuerelement einerseits und der Dekorschicht (4) und/oder der Trägerplatte (2) und/oder der diffusionsdichten Schicht (5) andererseits vorgesehen ist.

2. Bausatz nach Anspruch 1, **dadurch gekennzeichnet, dass** die diffusionsdichte Schicht (5) zwischen der Dekorschicht (4) und der Trägerplatte (2) und/oder auf einer der Dekorschicht (4) abgewandten Rückseite (8) der Trägerplatte (2) vorgesehen ist.

3. Verfahren zum Renovieren von Sanitärräumen, bei welchen zunächst als Bausatz werksseitig verschiedene Wandelemente (1, 6) umfassend eine Trägerplatte (2) und eine daran festgelegte Dekorschicht (4) gefertigt werden, wobei in mindestens einem der Wandelemente (6) in der Trägerplatte (2) Installationsleitungen (9) für die Warm- und/oder Kaltwasserführung und/oder Installationsleitungen (9) für ein Heizungsmodul und/oder Elektroleitungen als Installationsleitungen eingebettet sind, welche sich über mindestens einen Teil der Höhe des jeweiligen Wandelements erstrecken, und wobei an dem Wandelement (6) den Installationsleitungen (9) und/oder den Elektroleitungen zugeordnete Funktionsstellen (11), welche als Anschlussstellen oder Steuerelemente für einen Wasser- und/oder Stromverbraucher und/oder für das Heizmodul ausgebildet sind, vorgesehen werden, und bei welchen die vorgefertigten Wandelemente (1, 6) dann an den Wänden (20) des Sanitärraums an den hierfür vorgesehenen Stellen festgelegt werden und die wandelementseitigen Installationsleitungen (9) und/oder Elektroleitungen mit den Wasser- und/oder Stromverbrauchern und/oder mit den im Sanitärraum vorhandenen Versorgungs- und/oder Entsorgungsrohren verbunden werden, **dadurch gekennzeichnet, dass** zur diffusionsdichten Ausbildung des Wandelements (1, 6) zwischen der Funktionsstelle (11) einerseits und der Trägerplatte (2) und/oder der Dekorschicht (4) des Wandelements (1, 6) andererseits ein Diffusionsmittel (12, 13) eingebracht wird, welches den Durchtritt und/oder Eintrag von Feuchtigkeit im Bereich der Funktionsstelle (11) entgegenwirkt.

4. Verfahren nach Anspruch 3, **dadurch gekennzeichnet, dass** eine Diffusionsschicht (5) an dem Wandelement (1, 6) zwischen der Dekorschicht (4) und der Trägerplatte (2) oder auf einer der Dekorschicht (4) abgewandten Rückseite (8) der Trägerplatte (2) ausgebildet wird.

## Claims

1. Kit for cladding and plumbing sanitary rooms comprising a plurality of wall elements (1, 6) prefabricated ex works, the wall elements (1, 6) including a carrier plate (2) and a decorative layer (4) connected to the carrier plate (2), and installation lines (9) for carrying hot and/or cold water and/or installation lines (9) for a heating module and/or electrical lines being provided in at least one wall element (6) in the carrier plate (2), which extend over part of the height of the at least one wall element (6), and comprising at least one functional location (11) assigned to the installation lines (9) and/or the electrical lines and formed as a connection point or a control element for a water and/or power load and/or for the heating module, the wall element (1, 6) being formed at least in portions as a diffusion-tight wall element (1, 6), the carrier plate (2) and/or the decorative layer (4) being formed diffusion-tight and/or a diffusion-tight layer (5) additionally being provided, the diffusion-tight layer (5) being interrupted in the region of the wall element (6) as a result of a recess (10) provided for the installation line (9), **characterised in that** in the region of the functional locations (11) provided on the wall element (1, 6) the diffusion layer is produced using an additionally introduced diffusion means (12, 13), which is provided between the connection point and/or the control element on the one hand and the decorative layer (4) and/or the carrier plate (2) and/or the diffusion-tight layer (5) on the other hand.

2. Kit according to claim 1, **characterised in that** the diffusion-tight layer (5) is provided between the decorative layer (4) and the carrier plate (2) and/or on a rear face (8) of the carrier plate (2) facing away from the decorative layer (4).

3. Method for renovating sanitary rooms, in which initially wall elements (1, 6) which are different ex works, including a carrier plate (2) and a decorative layer (4) fixed thereto, are produced as a kit, installation lines (9) for carrying hot and/or cold water and/or installation lines (9) for a heating module and/or electrical lines being embedded in at least one of the wall elements (6) in the carrier plate (2) as installation lines, which extend over at least part of the height of the wall element in question, and functional locations (11), assigned to the installation lines (9) and/or the electrical lines and formed as connection points or control elements for a water and/or power load and/or for the heating module, being provided on the wall element (6), and in which subsequently the prefabricated wall elements (1, 6) are fixed to the walls (20) of the sanitary room at the points provided for this purpose, and the installation lines (9) and/or electrical lines on the wall element side being connected to the water and/or power loads and/or to the supply and/or waste pipes present in the sanitary room, **characterised in that** a diffusion means (12, 13), which counters the penetration and/or entry of moisture in the region of the functional location (11), is introduced between the functional location (11) on the one hand and the carrier plate (2) and/or the decorative layer (4) of the wall element (1, 6) on the other hand so as to form the wall element (1, 6) diffusion-tight.

4. Method according to claim 3, **characterised in that** a diffusion layer (5) is formed on the wall element (1, 6) between the decorative layer (4) and the carrier plate (2) or on a rear face (8) of the carrier plate (2) facing away from the decorative layer (4).

## Revendications

1. Kit de tubage et d'habillage de pièces sanitaires, comprenant une pluralité d'éléments muraux (1, 6) préfabriqués côté usine, dans lequel les éléments muraux (1, 6) comprennent une plaque de support (2) et une couche de décoration (4) reliée à la plaque de support (2), et dans lequel dans au moins un élément mural (6), des conduites d'installation (9) pour l'acheminement d'eau chaude et/ou d'eau froide et/ou des conduites d'installation (9) pour un module de chauffage et/ou des câbles électriques sont ménagés dans la plaque de support (2), lesquels s'étendent sur une partie de la hauteur de l'au moins un élément mural (6), et comprenant au moins un point fonctionnel (11) associé aux conduites d'installation (9) et/ou aux câbles électriques, lequel est réalisé en tant qu'un point de raccordement ou qu'un élément de commande pour un consommateur d'eau et/ou de courant et/ou pour le module de chauffage, dans lequel kit l'élément mural (1, 6) est réalisé au moins par sections en tant qu'élément mural (1, 6) étanche à la diffusion, dans lequel la plaque de support (2) et/ou la couche de décoration (4) sont réalisées de manière étanche à la diffusion, et/ou dans lequel une couche (5) étanche à la diffusion est ménagée en supplément, la couche (5) étanche à la diffusion étant interrompue au niveau de l'élément mural (6) en raison d'un évidement (10) ménagé pour la conduite d'installation (9), **caractérisé en ce qu'**au niveau des points fonctionnels (11) ménagés sur l'élément mural (1, 6), l'étanchéité à la diffusion est réalisée par un moyen de diffusion (12, 13) appliqué en supplément, lequel est ménagé entre le point de raccordement et/ou l'élément de commande, d'une part, et la couche de décoration (4) et/ou la plaque de support (2) et/ou la couche (5) étanche à la diffusion (5), d'autre part.

2. Kit selon la revendication 1, **caractérisé en ce que** la couche (5) étanche à la diffusion est ménagée entre la couche de décoration (4) et la plaque de support (2) et/ou sur un côté arrière (8) de la plaque de support (2), détourné de la couche de décoration (4).

3. Procédé de rénovation de pièces sanitaires, dans lequel différents éléments muraux (1, 6) comprenant une plaque de support (2) et une couche de décoration (4) fixée sur la plaque de support sont d'abord fabriquées, côté usine, en tant que kit, dans lequel, dans au moins un des éléments muraux (6), des conduites d'installation (9) pour l'acheminement d'eau chaude et/ou d'eau froide et/ou des conduites d'installation (9) pour un module de chauffage et/ou des câbles électriques sont intégrés dans la plaque de support (2) en tant que conduites d'installation, lesquels s'étendent sur au moins une partie de la hauteur de l'élément mural respectif, et dans lequel des points fonctionnels (11) associés aux conduites d'installation (6) et/ou aux câbles électriques, lesquels sont réalisés en tant que points de raccordement ou éléments de commande pour un consommateur d'eau et/ou de courant et/ou pour le module de chauffage, sont ménagés sur l'élément mural (6), et dans lequel les éléments muraux (1, 6) préfabriqués sont ensuite fixés aux murs (20) de la pièce sanitaire aux endroits ménagés à cet effet, et dans lequel les conduites d'installation (9) côté éléments muraux et/ou les câbles électriques sont raccordés aux consommateurs d'eau et/ou de courant et/ou aux conduites d'alimentation et/ou d'évacuation présentes dans la pièce sanitaire, **caractérisé en ce que** pour la réalisation, étanche à la diffusion, de l'élément mural (1, 6), un moyen de diffusion (12, 13) est appliqué entre le point fonctionnel (11), d'une part, et la plaque de support (2) et/ou la couche de décoration (4) de l'élément mural (1, 6), d'autre part, lequel empêche le passage et/ou l'entrée d'humidité au niveau du point fonctionnel (11).

4. Procédé selon la revendication 3, **caractérisé en ce qu'**une couche de diffusion (5) est réalisée sur l'élément mural (1, 6) entre la couche de décoration (4) et la plaque de support (2) ou sur un côté arrière (8) de la plaque de support (2), détourné de la couche de décoration (4).
